(19) Europäisches Patentamt
European Patent Office
Office européen des brevets

(11) Publication number: 0 219 910 A1

## (12) EUROPEAN PATENT APPLICATION

(21) Application number: 86201770.4

(22) Date of filing: 13.10.86

(51) Int. Cl.⁴: C 08 F 8/12
C 08 F 26/02

(30) Priority: 22.10.85 NL 8502882

(43) Date of publication of application:
29.04.87 Bulletin 87/18

(84) Designated Contracting States:
BE CH DE ES FR GB IT LI NL SE

(71) Applicant: STORK FRIESLAND B.V.
84 Stationsweg
NL-8401 DT Gorredijk(NL)

(72) Inventor: Buijs, Henricus C. W. M.
146, Franciscushof
NL-4133 BJ Vianen(NL)

(72) Inventor: Naaktgeboen, Aart Jacob
109, Langewijk
NL-7701 AD Dedemsvaart(NL)

(72) Inventor: van Elven, Aris
35, Hittekamp
NL-3956 RE Leersum(NL)

(74) Representative: Timmers, Cornelis Herman Johannes et al,
EXTERPATENT Willem Witsenplein 4
NL-2596 BK 's-Gravenhage(NL)

# (54) Process for the preparation of an N-vinyl-N-akylamine (co) polymer and composite membrane produced with the application of this (co) polymer.

(57) Process for the preparation of an N-vinyl-N-alkylamine (co) polymer by acid hydrolysis of a corresponding N-vinyl-N-alkyl carbonamide chain units containing polymer at elevated temperature.

As starting substance is used:

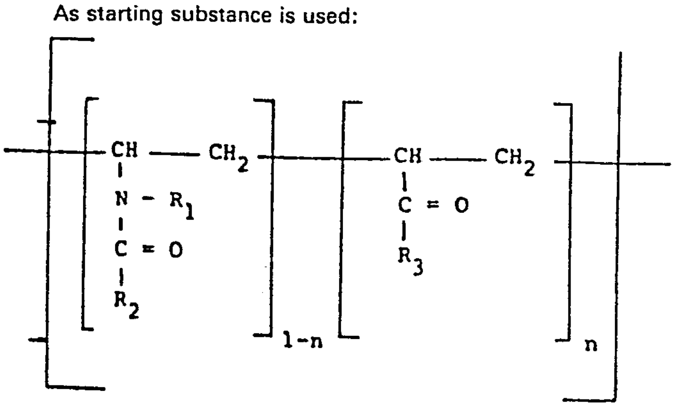

may represent H or an $C_{1\text{-}5}$ alkyl group.

The hydrolysis is carried out at an acid equivalent/hydrolysable monomer molar ratio in the range of 1,0 - 5,0 and an acid normality in the range of 1,0 - 5,0.

The invention also concerns a semipermeable composite membrane obtained with use of the polymer obtained according the process of the invention.

EP 0 219 910 A1

SUMMARY: Process for the preparation of an N-vinyl-N-alkyl-amine (co) polymer and composite membrane produced with the application of this (co) polymer.

BACKGROUND OF THE INVENTION.

The invention concerns a process for the preparation of an N-vinyl-N-alkylamine (co) polymer by the hydrolysis of an N-vinyl-N-alkyl carbonamide chain units containing polymer in an acidic environment and at elevated temperature.

DESCRIPTION OF PRIOR ART.

The description of a similar process is contained in US Patent No. 4 051 138 in which the hydrolysis of an N-methyl-N-vinylacetamide polymer with 6N hydrochloric acid at 125°C. is described. The material obtained has a molecular mass of about 20,000 Dalton and was totally hydrolysed after about 40 hours.

Such a process has the disadvantage that it does not yield good results in all cases and that dependent upon the distribution of the molecular weights of the starting polymers to be hydrolysed, the results are highly variable, as far as the necessary reaction times and the hydrolysis percentages to be achieved are concerned.

SUMMARY OF THE INVENTION.

The objective of the present application is to offer a solution to the abovementioned disadvantage and to devise a

process in which the hydrolysis of a suitable starting polymer would yield the desired hydrolysis percentage under all circumstances, achieving a result that is not influenced by the molecular weight distribution in the polymer to be hydrolysed.

Surprisingly, the applicants have discovered that the desired objectives could be achieved by utilizing a process of the abovementioned type, which according to the invention is characterized in that a polymer of formula:

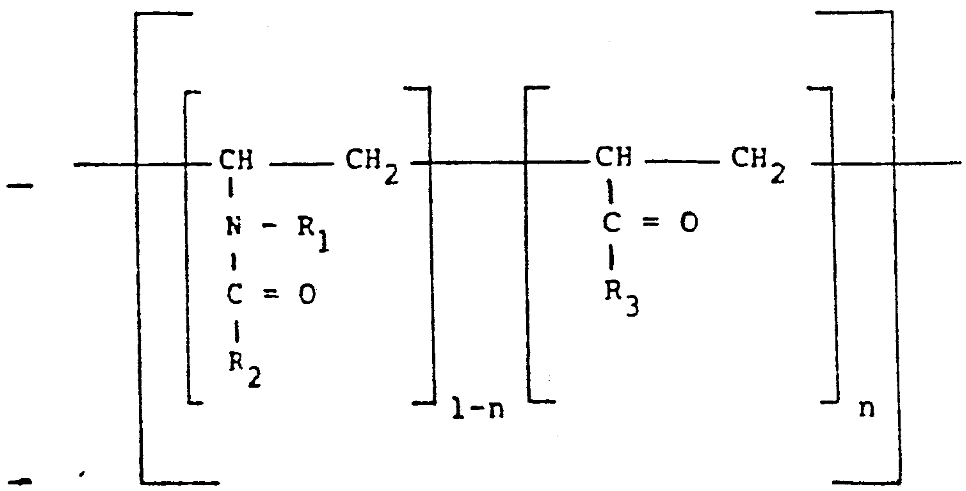

having an average molecular mass between $2.10^4$ and $6.10^5$ Dalton, where n is between 0 and 0.99 and where $R_1$, $R_2$ and $R_3$ could be equal or different and representing hydrogen or an alkyl group with 1-5 carbon atoms, is hydrolysed, the hydrolysis is executed at an acid equivalent/hydrolysable monomer ratio (acid/mon) of 1.0-5.0 and an acid normality of 1.0-5.0.

It appears that with the hydrolysis of polymers containing N-N-vinyl-N-alkyl carbonamide chain units, excellent results may be obtained, in which the degree of hydrolysis to be achieved is not influenced by the molecular mass of the starting polymer, when the ratio of the number of acid equivalents

to the number of molecules of hydrolysable monomer of the chain is kept between 1.0 and 5.0, while simultaneously the acid is diluted to the extent that the reaction mixture has achieved a normality between 1.0 and 5.0.

Hydrolysis percentages of between 60 and 100% were achieved without problems and these percentages were repeatable, the result being independent of the degree of polymerization of the starting polymer and the amount of polymer to be simultaneously hydrolysed.

Both quantities of polymer up to approx. 50 gm. and quantities of the order of 5 kg may be hydrolysed with good results according to the process of the invention.

Excellent results were obtained when the acid/monomer ratio is between 1.2 and 2.0 and the acid normality in the mixture is between 2.0 and 4.0.

A further characteristic of the invention is that the hydrolysis is executed at a temperature between 70 and 150°C., an over-pressure of 0-10.0 x $10^5$ Pa. and a reaction time of at least 50 hours.

By preference, the hydrolysis should be executed at a temperature between 110 and 130°C., an over-pressure of between 1.2 and 6.0 x $10^5$ Pa. and a reaction time of 60-110 hours.

For the preparation of poly-N-vinyl-N-methylamine, poly-N-vinyl--N-methylacetamide is hydrolysed with hydrochloric acid at a temperature of 115-125°C. an acid equivalent/N-vinyl-N--methylacetamide monomer molecular ratio of 1.5-1.8, a

hydrochloric acid normality of 2.5-3.5, an over-pressure of 3.0 x $10^5$ Pa. and a reaction time of 95-105 hours.

The process according to the invention, is suitable for the preparation of homopolymers, but it is also excellently suited for the preparation of co-polymers and ter-polymers. Consequently, for the preparation of a co-polymer of N-vinyl--N-methylamine and vinyl-alcohol, an N-vinyl-N-methylacetamide/vinylacetate co-polymer would be utilized. In a very advantageous embodiment of the process according to the invention, the preparation of co-polymers is carried out by hydrolysing a co-polymer of 40-99 molecule % N-vinyl-N-methylacetamide and 60-1 molecule % vinylacetate with a HCl/N-vinyl-N-methyl--acetamide + vinylacetate monomer molecular ratio of 1.5-1.8 and a hydrochloric acid normality of 3.0, allowing the reaction mixture to stand for 80-2 hours at an ambient temperature of approx. 20-25°C. followed by a further 7-120 hours hydrolysation at 95-105°C. at an over-pressure of 0-0.3 x $10^5$ Pa.
At the end of the hydrolysis process, the polymeric amine will be present in the form of a salt, e.g., a HCl salt. In order to release the amine at the end of the hydrolysis the polymer is isolated by making the hydrolysate strongly alkaline, removing the excess base by e.g., dialysis, until the dialysis water is neutral and salt-free, followed by concentration and freeze-drying, in order to obtain the polymer. Apart from dialysis, the polymeric amine can also be successfully isolated by the use of ultra-filtration techniques. In order to isolate N-vinyl-N-alkylamine polymer produced by hydrolysis, sodium hydroxide can be used successfully, although other bases easily soluble in water may also be used.

In the execution of the process according to the invention, it has become apparent that it is important to subject the polymer to be hydrolysed to extensive purification prior to hydrolysis and especially to remove monomer that has not reacted. Such a purification process may be successfully implemented by first dissolving the polymer in a suitable solvent, to reduce the solution to a high degree of viscosity, to precipitate the polymer by the introduction of a liquid (precipitant) in which the polymer does not dissolve but which can mix with the first solvent and finally to wash the polymer with the abovementioned liquid (precipitant).

The abovementioned purification process may also successfully be carried out with the application of ultra-filtration techniques.
Very good results are obtained if the polymer to be purified is dissolved in methanol and precipitation and washing processes are carried out using diethylether.

The invention also includes a semi-permeable composite membrane obtained by depositing the polymer on a porous carrier and reacting it with a suitable cross-linking agent. Such a membrane is obtained, for example, by absorbing a water-soluble polymer into a porous carrier and then to contact the surface of said carrier with the absorbed polymer, with a cross-linking agent contained in a liquid in which the polymer is not soluble.

By means of a reaction at the junction of the cross-linking agent and the polymer, a surface cross-linking of the polymer will take place, resulting in the creation of narrow pores in the junction layer, so that this layer will have membrane--like characteristics.

Very good results are obtained when, for the formation of such semi-permeable composite membranes, a polymer is used which is the subject of the present invention.

DETAILED DESCRIPTION OF THE INVENTION.

In the following TABLE 1, the results of many hydrolysis experiments are reproduced, where poly-N-vinyl-N-methyl-acetamide (PVMAc) is converted at a temperature of 120°C.

HYDROLYSIS OF POLY-N-VINYL-N-METHYLACETAMIDE (PVMAc) AT 120°C.

| Exp.No. | PVMAc | | HCl | | Mol.Ratio | Reaction Time | Hydrolysis (mol.%) | | Yield PVMA |
|---|---|---|---|---|---|---|---|---|---|
| | Mv. | gm. | ml. | mmol. | HCl/VMAc | (hours) | meas. | exp. | gm. |
| 1 | 68,900 | 5.0 | 15 | 180 | 3.6 | 98 | 60 | 59/60 | 3.8 |
| 2 | 68,900 | 5.0 | 15 | 90 | 1.8 | 98 | 94 | 94/94 | 3.0 |
| 3 | 68,900 | 5.0 | 25 | 75 | 1.5 | 65 | 96 | 95/96 | 3.2 |
| 4 | 68,900 | 7.5(2x) | 37.5(2x) | 112.5(2x) | 1.5 | 100 | 98 | 97/98 | 8.9 |
| 5 | 68,900 | 5.0 | 15 | 45 | 0.9 | 100 | 81 | 81/81 | 3.4 |
| 6 | 68,900 | 10.0 | 30 | 90 | 0.9 | 98 | 80 | 79/80/81 | 6.5 |
| 7 | 68,900 | 5.0 | 15 | 45** | 0.9 | 100 | 76 | 75/76 | 3.3 |
| 8 | 68,900 | 5.0 | 15 | 22.5** | 0.45 | 100 | 52 | 52/53 | 3.7 |
| 9 | 96,800 | 5.0 | 15 | 180 | 3.6 | 41 | - | 0/ 0/ 7* | 4.1 |
| 10 | 96,800 | 5.0 | 15 | 90 | 1.8 | 41 | 42 | 41/43/58* | 3.3 |
| 11 | 96,800 | 5.0 | 15 | 45 | 0.9 | 41 | 47 | 46/48* | 3.0 |
| 12 | 96,800 | 5.0 | 15 | 22.5 | 0.45 | 41 | 27 | 25/26/30* | 3.3 |
| 13 | 142,800 | 5.0(3x) | 25(3x) | 75(3x) | 1.5 | 97 | 99 | 98/99 | 9.2 |
| 14 | 189,000 | 2.0 | 10 | 30 | 1.5 | 98 | 96 | 94/98 | 1.2 |
| 15 | 534,000 | 5.0 | 25 | 75 | 1.5 | 65 | 98 | 97/98 | 3.2 |
| 16 | 534,000 | 5.0(2x) | 25(2x) | 75(2x) | 1.5 | 100 | 91 | 91/91 | 6.8 |

* : Determined by nitrogen analysis

** : HBr.

*** : $H_2SO_4$

The degree of hydrolysis is determined with the help of High Pressure Liquid Chromatography, HP LC.

The amount of acetic acid in the hydrolysate is determined in this way, from which the degree of hydrolysis can be calculated.

The above table reveals a number of important factors:

1. The hydrolysis percentage for a certain polymer is dependent upon the molecular ratio HCl/VMAc as is apparent when comparing tests 1 and 2. An acid/monomer ratio of 3.6, results in a hydrolysis percentage of 60, while a Mol. ratio of 1.8 for the same polymer and under the same conditions, results in a hydrolysis percentage of 94.
2. The influence of reaction time is not great, providing that it is longer than a certain minimum time which is about 60 hours, compare tests 3 and 4 with test 10. While noting that in the case of both tests a difference in molecular mass of the used polymer and a difference in molecular ratio HCl/VMAc is present, experience has shown that such small differences have little or no influence, while the most important factor to be taken into consideration is that in the experiments in any case, the molecular ratio acid/monomer should not deviate too much from the preferred range of 1.2 to 2.0.

The invention will now be illustrated with the help of non--limiting examples of execution:

<u>Example I</u>:

In order to show that in accordance with the invention, poly--N-vinyl-N-acetamide with high molecular masses may be hydrolysed

to a high degree of hydrolysation, first the starting polymer was prepared, using a known method of bulk-polymerization at 90°C. in Carius tubes with azo-iso--butyro-nitril (AIBN) as initiator. The resulting poly-N-vinyl-N-acetamide is isolated from the reaction medium by dissolving the mixture in water after polymerization, followed by concentration and freeze-drying.

Table A is a survey of the polymerization conditions and the yield with the resulting molecular masses (Mv).

| VMAc No. mol. | AIBN mol. % | Yield wt. % | Mol.wt.($\overline{M}v$). Dalton |
|---|---|---|---|
| 200 | 0.25 | 67 | 142,800 |
| 100 | 0.25 | 76 | 189,000 |
| 200 | 0.10 | 63 | 534,000 |

TABLE A: Polymerization of N-vinyl-N-methylacetamide (VMAc) with azo-iso-butyro-nitril (AIBN) to poly-N-vinyl--N-methylacetamide with high molecular masses (Mv).

The obtained and purified polymers were then hydrolised in accordance with the method of the invention. The reaction temperature was 120°C. at a pressure of 3 atm.; the molecular ratio HCl/VMAc was 1.5 and the normality of the reaction medium was adjusted with water to 3.0 N. The results are reproduced in Table B.

| PVMAc $\bar{M}v.$ | gm. | Reaction Time (Hours) | Hydrolysis mol. % | Yield PVMA gm. |
|---|---|---|---|---|
| 142,800 | 15.0 | 97 | 99 (98.99) | 9.2 |
| 189,000 | 2.0 | 98 | 96 (94.98) | 1.2 |
| 534,000 | 5.0 | 65 | 98 (97.98) | 3.2 |
| 534,000 | 10.0 | 100 | 91 (91.91) | 6.8 |

TABLE B: Hydrolysis of PVMAc to poly-N-vinylmethylamine (PVMA).

Example II:

In order to show the influence of the ratio of the HCl/VMAc on the hydrolysis, PVMAc was first prepared in a known way with solution polymerization in methanol at reflux temperature, for 18 hours. Starting with 1130 gm. methanol, in which 99 gm. VMAc were dissolved, to which 0.25 molecule % AIBN was added, after reducing the reaction mixture, take-up in water, and after freeze-drying, a PVMAc with a molecular mass of 68,200 was obtained.
Starting with 10 gm. of this polymer, the hydrolysis was once again carried out at 120°C. at 3 atm. for 100 hrs., where the amount of HCl per hydrolysis test was varied each time and at the beginning, the normality of all tests was adjusted with water to 3.0 N.

Table C shows the influence of the HCl/VMAc ratio on the degree of hydrolysis.

| Mol. Ratio HCl/VMAc | Hydrolysis (meas.) | Mol. % (exp.) |
|---|---|---|
| 0.7 | 69 | (69/69) |
| 0.8 | 78 | (78/78) |
| 0.9 | 83 | (83/83) |
| 1.2 | 93 | (92/93/94) |

TABLE C: Influence of the HCl/VMAc ratio on the hydrolysis of PVMAc under constant conditions (120°C./100 hrs./3.0 N.)

Example III:

In order to show the influence of normality on the hydrolysis, the PVMAc was prepared with a solution polymerization in water, where the concentration of the monomer VMAc was 30.0 wt. %. As initiator, $H_2O_2/NH_3$ of molecular ratio 1/2.77 was used, which was added gradually. The reaction time was 18 hrs. at 65°C.

The purified polymer PVMAc had a molecular mass of 181,400. 3 portions of this polymer were hydrolysed at 120°C. in Carius tubes, the molecular ratio HCl/VMAc was 1.5 and the reaction time was 100 hrs.

The normalities of the starting mixtures were adjusted with water to the desired amounts. The results are shown in Table D.

| Normality N | Hydrolysis (meas.) | Mol. % (exp.) |
|---|---|---|
| 1.0 | 82.5 | (82.5/82.5) |
| 3.0 | 95.5 | (95.5/95.4) |
| 5.0 | 90.0 | (89.8/90.2) |

TABLE D: Influence of normality on the hydrolysis of PVMAc under constant conditions (120°C./100 hrs./HCl/VMAc=1.5).

Example IV:

This example shows that following the method of the invention, constant quality can be achieved when small quantities are simultaneously hydrolysed.
The tests were carried out using 8 glass reaction flasks (capacity : 0.5 l.).
The quantity of PVMAc molecular mass (Mv = 167,500) in each flask was 50.0 gm., the molecular ratio HCl/VMAc was 1.5, while the normality of each reaction mixture was adjusted before the test to 3.0 N.
All flasks were equipped with stoppers and maintained at 120°C. for 100 hrs.
At the end of the test the hydrolysis was 93.0 $\pm$ 2.0 mol.%.
390.0 gm. of the abovementioned PVMAc was hydrolysed under the same conditions in an enamelled high-pressure chamber (Pfaudler 4 l.). The hydrolysis was 92.1 $\pm$ 2.0 mol.%.

Example V:

A co-polymer of 49 mol. % N-vinyl-N-methylacetamide and 51 mol.% vinyl acetate were hydrolysed with a HCl/monomer molecular ratio of 1.5 and a hydrochloric acid normality of 3. Prior to

the hydrolysis process, the reaction mixture was allowed to stand for 66 hours at 25°C. and thereafter was hydrolysed for 7 hours at 101°C. at normal pressure. A sample was taken after the specified period at 25°C. and it was established that the total degree of hydrolysation was 55.4%. After the hydrolysis process for 7 hours at 101°C. the degree of hydrolysis was again measured and found to be 94.2%. This result could be explained by assuming that in an ambient temperature environment the vinyl acetate part of the polymer is first hydrolysed and that the hydrolysis of the remaining vinyl methylacetamide part of the polymer is accelerated at 101°C. as a result of the presence of chain units of vinyl alcohol formed by the hydrolysis and by the acetic acid released by the first hydrolysis, respectively.

The fact remains that the eventual hydrolysis percentage is optimal when the acid/monomer molecular ratio is between 1.2 and 2.0 and the acid normality is between 2.0 and 4.0.

It should be noted that the hydrolysis described in the test above, concerning this execution example can also be carried out without the application of the pre-reaction period at room temperature.

At a temperature of 101°C. the hydrolysis of the vinyl acetate part is very rapid, so that in the same (or hardly increased) hydrolysis time, a complete hydrolysis takes place.

In the case of the hydrolysis of N-vinyl-N-alkyl carbonamide homopolymers, the minimum hydrolysis time of 50 hrs. is usually sufficient to completely hydrolyse this type of

co-polymer; the same is also valid in the case of ter-polymers containing vinyl acetate units. The two-stage hydrolysis procedure described, is very useful in the event that e.g., a separate modification of the vinyl alcohol part formed by hydrolysis has to be executed prior to further hydrolysis.

CLAIMS:

1. Process for the preparation of an N-vinyl-N-alkylamine (co) polymer by hydrolysis of an N-vinyl-N-alkyl carbonamide chainunits comprising polymer in an acidic environment and at elevated temperature characterized in that a polymer of formula 1

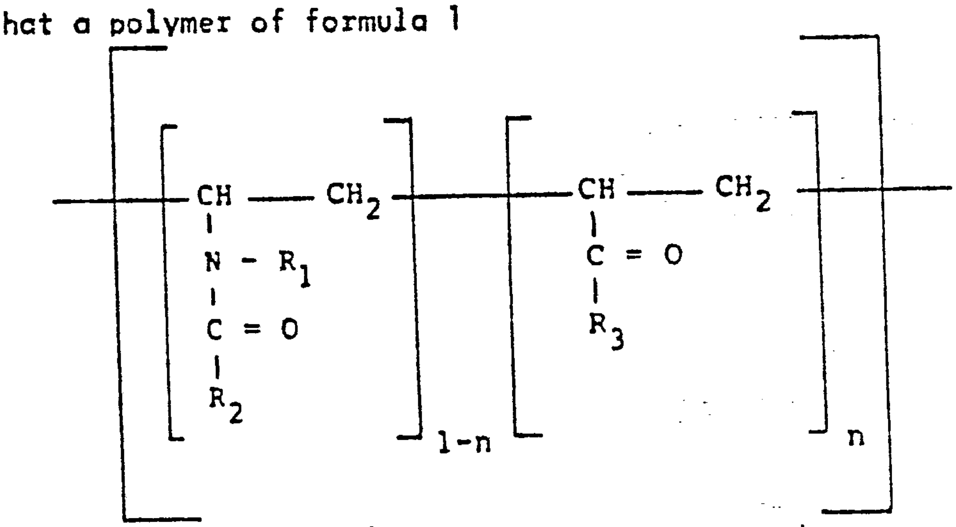

having an average molecular mass between $2.10^4$ and $6.10^5$ Dalton, where n is between 0 and 0.99 and where $R_1$, $R_2$ and $R_3$ may be equal or different and representing hydrogen or an alkyl group with 1-5 carbon atoms is hydrolysed and the hydrolysis is executed at an acid equivalent/hydrolysable monomer ratio (acid/mon) of 1.0-5.0 and an acid normality of 1.0-5.0.

2. Process according to claim 1, characterized in that the ratio (acid/mon) is 1.2-2.0 and the acid normality is 2.0-4.0.

3. Process according to claims 1 and 2 characterized in that the hydrolysis is executed at a temperature between 70 and 150°C., an over-pressure of $0-10 \times 10^5$ Pa. and a reaction time of at least 50 hours.

4. Process according to claim 3 characterized

i n that the hydrolysis is executed at a temperature between 110 and 130°C., an over-pressure between 1.2 and 5.0 x $10^5$ Pa. and a duration of 60-110 hours.

5. Process according to one or more of the claims 1 to 4 inclusive, c h a r a c t e r i z e d i n that the poly-N--vinyl-N-methylacetamide is hydrolysed with hydrochloric acid at a temperature of 115-125°C., an acid equivalent/N-vinyl--N-methylacetamide monomer molecular ratio of 1.5-1.8, a hydrochloric acid normality of 2.5-3.5, an over-pressure of 3.0 x $10^5$ Pa. and a reaction time of 95-105 hours under formation of poly-N-vinyl-N-methylamine.

6. Process according to one or both of the claims 1 and 2 c h a r a c t e r i z e d i n that a co-polymer of N-vinyl-N-methylamine and vinyl alcohol is prepared by hydrolysis of an N-vinyl-N-methylacetamide/vinyl acetate co-polymer.

7. Process according to one or both of the claims 1 and 2 and 6 c h a r a c t e r i z e d i n that a co-polymer of 40-99 molecule % N-vinyl-N-methylacetamide and 60-1 molecule % vinyl acetate is hydrolysed with a HCl/N-vinyl-N--methylacetamide + vinyl acetate monomer molecular ratio of 1.5-1.8 and a hydrochloric acid normality of 3, where the reaction mixture is first allowed to stand for 80-2 hours at ambient temperature, whereafter hydrolysation is carried out for a further 7-120 hours at 95-105°C. at an over-pressure of 0-0.3 x $10^5$ Pa.

8. Process according to one or more of the abovementioned claims 1 to 7 inclusive, c h a r a c t e r i z e d i n

that at the end of the hydrolysis process the polymer is isolated by making the hydrolysate strongly alkaline, removing the excess base by e.g., dialysis, until the dialysis water is neutral and salt-free, followed by concentration and freeze-drying, in order to win the polymer.

9. Process according to one or more of the abovementioned claims 1 to 8 inclusive, c h a r a c t e r i z e d i n that the polymer to be hydrolysed is purified prior to hydrolysis by dissolving the polymer in a suitable first solvent, to reduce the solution to a high degree of viscosity, to precipitate the polymer by the addition of a liquid in which the polymer does not dissolve but which can mix with the first solvent and to wash the polymer with the abovementioned other liquid.

10. Process according to claim 9 c h a r a c t e r i z e d i n that the polymer to be purified is dissolved in methanol and precipitation and washing are carried out using diethylether.

11. Semi-permeable composite membrane obtained by depositing a polymer on a porous carrier and reacting it with a suitable cross-linking agent, c h a r a c t e r i z e d i n that the polymer used is a polymer obtained according the process described in one or more of the abovementioned claims 1 to 10 inclusive.

European Patent Office

**EUROPEAN SEARCH REPORT**

0219910

Application number

EP 86 20 1770

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | EP-A-0 132 679 (BAYER) * Claims 1-9; page 5, line 21 - page 6, line 16 * --- | 1-7 | C 08 F 8/12<br>C 08 F 26/02 |
| Y | FR-A-1 587 554 (HOECHST) * Abstract, points 1-3; pages 2,5 * --- | 1-7 | |
| Y | US-A-4 393 174 (D.J. DAWSON) * Claims 1-10 * ----- | 1-7 | |

TECHNICAL FIELDS SEARCHED (Int Cl 4)

C 08 F

The present search report has been drawn up for all claims

| Place of search | Date of completion of the search | Examiner |
|---|---|---|
| THE HAGUE | 12-12-1986 | PERMENTIER W.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82